# EUROPÄISCHE PATENTANMELDUNG

(11) **EP 3 888 826 A1**
(43) Veröffentlichungstag der Anmeldung: **06.10.2021**
(21) Anmeldenummer: 20166931.4
(22) Anmeldetag: 31.03.2020
(51) Int. Cl.: B23B 5/12, B23B 27/16

(54) **ZERSPANUNGSWERKZEUG UND VERFAHREN ZUM INDEXIEREN EINES SCHNEIDEINSATZES**

(71) Anmelder: CERATIZIT Austria Gesellschaft m.b.H., 6600 Reutte (AT)
(72) Erfinder: Perktold, Helmut, 6600 Reutte (AT); Hohlrieder, Peter, 6600 Reutte (AT); Huber, Ronald, 6600 Reutte (AT)
(74) Vertreter: Ciesla, Dirk

(57) **Zusammenfassung**

Es wird ein Zerspanungswerkzeug (1) bereitgestellt, mit einem Werkzeugträger (2), an dem zumindest ein Sitz (3) zur Aufnahme eines auswechselbaren, indexierbaren Schneideinsatzes (4) ausgebildet ist, und einer Befestigungsschraube (5) zum Befestigen des Schneideinsatzes (4) an dem Sitz (3), die einen Kopfabschnitt (50) zur Abstützung an dem Schneideinsatz (4) und einen zumindest bereichsweise mit einem Außengewinde (52) versehenen Schaftabschnitt (51) aufweist. Der Sitz (3) weist eine Auflagefläche (30) zur Abstützung einer Unterseite (40) des Schneideinsatzes (4) und zumindest eine seitliche Anlagefläche (31) zur Abstützung einer Seitenfläche (41) des Schneideinsatzes (4) auf. In der Auflagefläche (30) ist ein Durchgangsloch (6) ausgebildet, durch das der Schaftabschnitt (51) der Befestigungsschraube (5) hindurchgreift. An dem Werkzeugträger (2) ist rückseitig der Auflagefläche (30) des Sitzes (3) ein Klemmelement (7) angeordnet, in dem ein mit dem Außengewinde (52) der Befestigungsschraube (5) zusammenwirkendes Innengewinde (72) ausgebildet ist. Die Befestigungsschraube (5) und das Klemmelement (7) sind gemeinsam in einer Verschieberichtung (V) verschiebbar.

## Beschreibung

Die vorliegende Erfindung betrifft ein Zerspanungswerkzeug und ein Verfahren zum Indexieren eines Schneideinsatzes.

Bei der zerspanenden Bearbeitung von insbesondere metallischen Werkstoffen kommen häufig Zerspanungswerkzeuge zum Einsatz, bei denen die mit dem zu bearbeitenden Material in Eingriff kommenden Schneiden an auswechselbaren Schneideinsätzen aus einem harten und verschleißbeständigen Material, wie insbesondere Hartmetall (cemented carbide), Cermet oder einer Schneidkeramik, ausgebildet sind, die lösbar an einem Werkzeugträger befestigt sind, der aus einem zäheren Material gebildet ist, wie z.B. aus Werkzeugstahl. Die Schneideinsätze sind dabei häufig als sogenannte indexierbare Schneideinsätze ausgebildet, die eine Mehrzahl von individuell nutzbaren Schneiden aufweisen, die sukzessiv nacheinander zum Einsatz gebracht werden können, wenn die jeweils vorhergehende verschlissen ist. Die Schneiden sind dabei üblicherweise derart angeordnet, dass der Schneideinsatz eine gewisse Symmetrie aufweist, sodass das Indexieren bzw. Weiterschalten, um die nächste Schneide in eine aktive Position zu bringen, durch eine Rotation des Schneideinsatzes um einen vorgegebenen Winkelbereich um eine Symmetrieachse des Schneideinsatzes erfolgt.

WO 2017/143368 A1 beschreibt einen Schneideinsatz zum Schäldrehen mit einer polygonalen Grundform, bei dem an einem Übergang von einer Oberseite zu Seitenflächen insgesamt sechs nacheinander nutzbare Schneiden ausgebildet sind, sodass ein Indexieren bzw. Weiterschalten auf eine nachfolgende Schneide durch eine Rotation um 60° (= 360°/6) um eine Symmetrieachse erfolgen kann. Der beschriebene Schneideinsatz ist zur Aufnahme an einem Sitz in einer Schälkassette als Werkzeugträger ausgebildet, wobei die Befestigung über eine Befestigungsschraube erfolgt, deren Kopfabschnitt sich an dem Schneideinsatz abstützt und deren Schaftabschnitt mit einem Außengewinde versehen ist, das mit dem Innengewinde einer Gewindebohrung in dem Sitz der Schälkassette zusammenwirkt. Um den Schneideinsatz zu indexieren, wird die Befestigungsschraube vollständig entfernt, der Schneideinsatz in dem Sitz um 60° gedreht und anschließend der Schaftabschnitt der Befestigungsschraube wieder durch ein Durchgangsloch in dem Schneideinsatz hindurchgeführt und deren Außengewinde in das Innengewinde der Gewindebohrung eingeschraubt.

Es ist Aufgabe der vorliegenden Erfindung, ein verbessertes Zerspanungswerkzeug und ein verbessertes Verfahren zum Indexieren eines Schneideinsatzes bereitzustellen, die insbesondere ein einfacheres und zeitsparenderes Indexieren ermöglichen.

Die Aufgabe wird durch ein Zerspanungswerkzeug nach Anspruch 1 gelöst. Vorteilhafte Weiterbildungen sind in den abhängigen Ansprüchen angegeben.

Das Zerspanungswerkzeug hat einen Werkzeugträger, an dem zumindest ein Sitz zur Aufnahme eines auswechselbaren, indexierbaren Schneideinsatzes ausgebildet ist, und eine Befestigungsschraube zum Befestigen des Schneideinsatzes an dem Sitz, die einen Kopfabschnitt zur Abstützung an dem Schneideinsatz und einen zumindest bereichsweise mit einem Außengewinde versehenen Schaftabschnitt aufweist. Der Sitz weist eine Auflagefläche zur Abstützung einer Unterseite des Schneideinsatzes und zumindest eine seitliche Anlagefläche zur Abstützung einer Seitenfläche des Schneideinsatzes auf. In der Auflagefläche ist ein Durchgangsloch ausgebildet ist, durch das der Schaftabschnitt der Befestigungsschraube hindurchgreift. An dem Werkzeugträger ist rückseitig der Auflagefläche des Sitzes ein Klemmelement angeordnet, in dem ein mit dem Außengewinde der Befestigungsschraube zusammenwirkendes Innengewinde ausgebildet ist. Die Befestigungsschraube und das Klemmelement sind gemeinsam in einer Verschieberichtung versch iebbar.

Da das Klemmelement vorgesehen ist, mit dem die Befestigungsschraube zusammenwirkt und die Befestigungsschraube und das Klemmelement gemeinsam in der Verschieberichtung verschiebbar sind, kann durch ein leichtes Lösen der Schraubverbindung und durch ein Verschieben der Befestigungsschraube und des Klemmelements gemeinsam mit dem durch die Befestigungsschraube gehaltenen Schneideinsatz die Seitenfläche des Schneideinsatzes von der seitlichen Anlagefläche entfernt werden, sodass der Schneideinsatz durch Drehung um die Schraubenachse der Befestigungsschraube indexiert werden kann, ohne dass die Befestigungsschraube vollständig entfernt zu werden braucht. Daher kann das Indexieren in sehr einfacher und schneller Weise erfolgen und der Schneideinsatz ist beim Indexieren gegen Herunterfallen gesichert. Das leichte Lösen der Schraubverbindung erfordert dabei nur eine relativ geringe Drehung der Befestigungsschraube um ihre Schraubenachse. Die Unterseite des Schneideinsatzes kann sich z.B. unmittelbar an der Auflagefläche abstützen oder z.B. auch mittelbar über eine zwischen der Unterseite des Schneideinsatzes und der Auflagefläche angeordnete Unterlagscheibe. Bevorzugt kann sich die seitliche Anlagefläche senkrecht zu der Auflagefläche erstrecken.

Gemäß einer Weiterbildung weist der Werkzeugträger ferner einen Anschlag auf, der die gemeinsame Verschiebung der Befestigungsschraube und des Klemmelements begrenzt. In diesem Fall ist eine besonders einfache Handhabung ermöglicht, bei der die Verschiebung auf das Ausmaß reduziert werden kann, die für das Indexieren nötig ist. Der Anschlag kann z.B. durch eine Seite des Durchgangslochs, die die Bewegung der Befestigungsschraube begrenzt, oder durch eine Begrenzungswand einer Ausnehmung, in der das Klemmelement aufgenommen ist und die die Bewegung des Klemmelements begrenzt, gebildet sein.

Gemäß einer Weiterbildung weist die Verschieberichtung eine Richtungskomponente senkrecht zu der seitlichen Anlagefläche auf. In diesem Fall kann der Schneideinsatz mit geringer Verschiebung ausreichend von der seitlichen Anlagefläche entfernt werden, sodass eine Indexierung ermöglicht wird. Die Verschieberichtung kann zusätzlich auch eine Richtungskomponente parallel zu der seitlichen Anlagefläche aufweisen.

Gemäß einer Weiterbildung weist der Sitz zumindest eine weitere seitliche Anlagefläche zur Abstützung einer weiteren Seitenfläche des Schneideinsatzes auf. In diesem Fall kann der Schneideinsatz besonders zuverlässig auch mit einer formschlüssigen Komponente an dem Sitz gehalten werden, sodass einer unbeabsichtigten Lockerung der Schraubverbindung zwischen der Befestigungsschraube und dem Klemmelement durch bei der Zerspanung auftretende Kräfte entgegengewirkt wird. Die weitere seitliche Anlagefläche erstreckt sich dabei bevorzugt in einer Ebene, die von der Ebene verschieden ist, in der sich die erste seitliche Anlagefläche erstreckt. Bevorzugt kann sich die weitere seitliche Anlagefläche senkrecht zu der Auflagefläche erstrecken.

Gemäß einer Weiterbildung weist die Verschieberichtung eine Richtungskomponente senkrecht zu der weiteren seitlichen Anlagefläche auf. In diesem Fall kann der Schneideinsatz mit geringer Verschiebung auch ausreichend von der weiteren seitlichen Anlagefläche entfernt werden, sodass eine Indexierung ermöglicht wird.

Wenn die seitliche Anlagefläche und die weitere seitliche Anlagefläche in Blickrichtung senkrecht zu der Auflagefläche einen sitzseitigen Innenwinkel α < 90° einschließen, wird der Schneideinsatz besonders zuverlässig auch mit einer formschlüssigen Komponente an dem Sitz gehalten.

Gemäß einer Weiterbildung ist das Durchgangsloch als Langloch mit einer länglichen Querschnittsform ausgebildet und die Längsachse der länglichen Querschnittsform verläuft in der Verschieberichtung. In diesem Fall wird die durch das Durchgangsloch verursachte Verkleinerung der wirkenden Auflagefläche geringgehalten. Ferner kann die Verschieberichtung in diesem Fall durch die Form des Durchgangslochs vorgegeben werden. Es sind verschiedene Querschnittsformen des Langlochs, wie z.B. im Wesentlichen rechteckig, mit rechteckiger Grundform mit gekrümmten kurzen Seiten, etc. möglich.

Gemäß einer Weiterbildung ist das Klemmelement in einer rückseitigen Ausnehmung des Werkzeugträgers aufgenommen. In diesem Fall können die Verschieberichtung und auch das Ausmaß der ermöglichten Verschiebung in einfacher Weise durch die Form der Ausnehmung vorgegeben werden. Ferner kann auch die Sicherung des Klemmelements gegen Rotation bei dem Betätigen der Befestigungsschraube in einfacher Weise durch die Form der Ausnehmung bewirkt werden. Bevorzugt ist das Klemmelement verdrehsicher und in der Verschieberichtung verschiebbar in der Ausnehmung gehalten.

Gemäß einer Weiterbildung ist das Zerspanungswerkzeug eine Schälkassette zum Schäldrehen. Bevorzugt kann das Zerspanungswerkzeug dabei zumindest zwei Sitze zur Aufnahme von auswechselbaren Schneideinsätzen aufweisen.

Gemäß einer Weiterbildung weist das Zerspanungswerkzeug einen an dem Sitz angeordneten auswechselbaren, indexierbaren Schneideinsatz auf.

Die Aufgabe wird auch durch ein Verfahren zum Indexieren eines Schneideinsatzes nach Anspruch 13 gelöst. Vorteilhafte Weiterbildungen sind in den abhängigen Ansprüchen angegeben.

Es handelt sich um ein Verfahren zum Indexieren eines Schneideinsatzes an einem Sitz eines Zerspanungswerkzeugs, wobei das Zerspanungswerkzeug eine Befestigungsschraube zum Befestigen des Schneideinsatzes an dem Sitz aufweist, die einen Kopfabschnitt zur Abstützung an dem Schneideinsatz und einen zumindest bereichsweise mit einem Außengewinde versehenen Schaftabschnitt aufweist, wobei der Sitz eine Auflagefläche zur Abstützung einer Unterseite des Schneideinsatzes und zumindest eine seitliche Anlagefläche zur Abstützung einer Seitenfläche des Schneideinsatzes aufweist, der Schaftabschnitt der Befestigungsschraube ein Durchgangsloch in der Auflagefläche durchgreift und das Außengewinde mit einem Innengewinde in einem rückseitig der Auflagefläche verschiebbar angeordneten Klemmelement zusammenwirkt. Das Verfahren weist die Schritte auf:
- Lockern der Gewindeverbindung zwischen dem Außengewinde der Befestigungsschraube und dem Innengewinde des Klemmelements, ohne die Befestigungsschraube vollständig von dem Klemmelement zu lösen;
- gemeinsames Verschieben der Befestigungsschraube, des Klemmelements und eines durch die Befestigungsschraube gehaltenen auswechselbaren indexierbaren Schneideinsatzes entlang einer Verschieberichtung, sodass der Schneideinsatz nicht mit einer Seitenfläche an der seitlichen Anlagefläche anliegt;
- Indexieren des Schneideinsatzes durch Drehung des Schneideinsatzes um die Schraubenachse der Befestigungsschraube um einen vorgegebenen Winkelbereich;
- gemeinsames Verschieben der Befestigungsschraube, des Klemmelements und des Schneideinsatzes zu der seitlichen Anlagefläche hin, sodass der Schneideinsatz mit einer Seitenfläche an der seitlichen Anlagefläche anliegt; und
- Anziehen der Gewindeverbindung zwischen dem Außengewinde der Befestigungsschraube und dem Innengewinde des Klemmelements, sodass der Schneideinsatz an dem Sitz festgeklemmt wird.

Durch das Lockern der Gewindeverbindung, das gemeinsame Verschieben, Indexieren und wieder gemeinsames Verschieben von Befestigungsschraube, Klemmelement und Schneideinsatz, bis dieser mit einer Seitenfläche an der seitlichen Anlagefläche anliegt, kann der Schneideinsatz in besonders einfacher und schneller Weise indexiert werden, um nach dem Verschleiß eines Schneidkantenabschnitts den nächsten Schneidkantenabschnitt in eine aktive Position zu bringen. Dabei bleibt der Schneideinsatz auch während des Indexierens gegen Herunterfallen gesichert.

Gemäß einer Weiterbildung erfolgt das gemeinsame Verschieben in einer Verschieberichtung, die eine Richtungskomponente senkrecht zu der seitlichen Anlagefläche aufweist. In diesem Fall ist nur eine geringe Verschiebestrecke erforderlich, um das Indexieren zu ermöglichen.

Gemäß einer Weiterbildung ist das Klemmelement verdrehsicher an dem Zerspanungswerkzeug gehalten. Dies kann z.B. durch eine formschlüssige Aufnahme des Klemmelements in einer Ausnehmung in dem Zerspanungswerkzeug bewirkt werden. Durch die verdrehsichere Anordnung wird eine besonders einfache und komfortable Indexierung ermöglicht.

Gemäß einer Weiterbildung werden die Befestigungsschraube und das Klemmelement bei dem gemeinsamen Verschieben durch das Durchgangsloch und/oder eine Ausnehmung für das Klemmelement in der Verschieberichtung in dem Zerspanungswerkzeug geführt. Dies kann z.B. durch eine Ausbildung des Durchgangsloches als Langloch oder durch eine Formgebung der Ausnehmung derart, dass das Klemmelement in dieser schienenartig geführt wird, erreicht werden. In diesem Fall kann das Indexieren in besonders komfortabler Weise erfolgen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Darstellung eines Zerspanungswerkzeugs gemäß einer ersten Ausführungsform;
- Fig. 2:: eine schematische Schnittdarstellung des Zerspanungswerkzeugs in dem Bereich eines Sitzes für einen auswechselbaren, indexierbaren Schneideinsatz entsprechend einem Schnitt entlang der Linie II-II der nachfolgenden Fig. 5, jedoch mit Befestigungsschraube;
- Fig. 3:: eine schematische Teildarstellung im Bereich des Sitzes in Aufsicht ohne Schneideinsatz;
- Fig. 4:: eine schematische Darstellung des Bereichs des Werkzeugträgers rückseitig des Sitzes;
- Fig. 5:: eine schematische Darstellung des Bereichs des Werkzeugträgers rückseitig des Sitzes mit einem an dem Sitz aufgenommenen auswechselbaren, indexierbaren Schneideinsatz in einer Klemmposition;
- Fig. 6:: eine Fig. 5 entsprechende schematische Darstellung mit dem auswechselbaren, indexierbaren Schneideinsatz in einer Indexierposition;
- Fig. 7:: eine schematische Teildarstellung des Sitzes in Aufsicht mit einem daran aufgenommenen auswechselbaren, indexierbaren Schneideinsatz in der Klemmposition;
- Fig. 8:: eine Fig. 7 entsprechende schematische Teildarstellung mit dem Schneideinsatz in der Indexierposition;
- Fig. 9:: eine schematische perspektivische Darstellung eines Zerspanungswerkzeugs gemäß einer zweiten Ausführungsform mit einem an diesem gehaltenen auswechselbaren, indexierbaren Schneideinsatz in einer Klemmposition;
- Fig. 10:: eine schematische perspektivische Darstellung des Zerspanungswerkzeugs gemäß der zweiten Ausführungsform mit dem Schneideinsatz in einer Indexierposition;
- Fig. 11:: eine schematische Schnittdarstellung im Bereich des Sitzes bei einer Abwandlung in einer Klemmposition;
- Fig. 12:: eine schematische Schnittdarstellung im Bereich des Sitzes bei der Abwandlung in einer Indexierposition;
- Fig. 13:: eine schematische Darstellung des Bereichs des Werkzeugträgers rückseitig des Sitzes bei einer weiteren Abwandlung;
- Fig.14:: eine schematische Darstellung des Bereichs des Werkzeugträgers rückseitig des Sitzes bei noch einer weiteren Abwandlung in einer Klemmposition; und
- Fig. 15:: eine schematische Darstellung der Abwandlung aus Fig. 14 in einer Indexierposition.

### ERSTE AUSFÜHRUNGSFORM

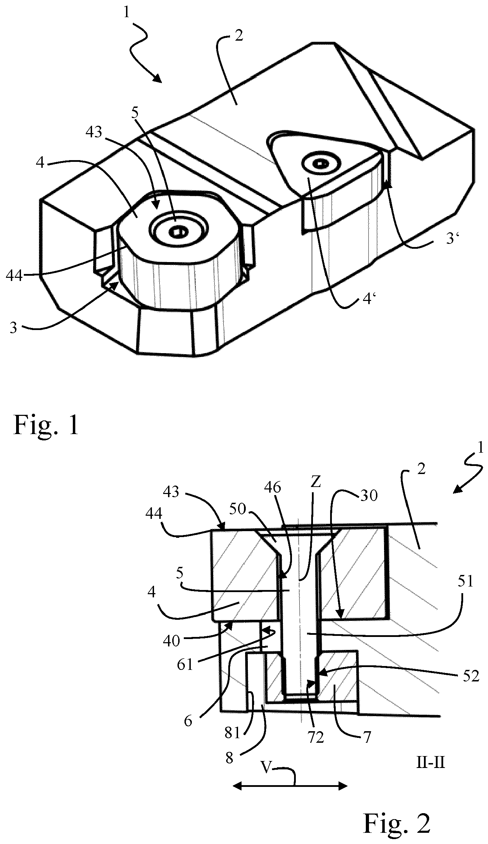

Eine erste Ausführungsform des Zerspanungswerkzeugs wird im Folgenden unter Bezug auf die Fig. 1 bis Fig. 8 beschrieben.

Das Zerspanungswerkzeug 1 ist bei der ersten Ausführungsform als eine Schälkassette zum Schäldrehen ausgebildet. Beim Schäldrehen wird von einem im Wesentlichen kreiszylindrischen Werkstück eine Oberflächenschicht spanend abgetragen, wodurch das Werkstück einen geringeren Durchmesser erhält. Dabei erfolgt zwischen dem Werkstück und dem Zerspanungswerkzeug 1 eine Relativbewegung um die Längsachse des Werkstücks. Z.B. kann das Werkstück um seine Längsachse rotieren und das Zerspanungswerkzeug 1 wird mit einer vorgegebenen Schnitttiefe in radialer Richtung und mit einem vorgegebenen Vorschub in axialer Richtung entlang der Längsachse des Werkstücks bewegt oder das Werkstück wird entlang seiner Längsachse mit einem vorgegebenen Vorschub relativ zu dem Zerspanungswerkzeug 1 bewegt, ohne um seine Längsachse zu rotieren, und das Zerspanungswerkzeug 1 wird mit einer vorgegebenen Schnitttiefe in radialer Richtung auf einer Kreisbahn um die Längsachse des Werkstücks bewegt. Bei dem Schäldrehen können dabei auch mehrere solche Zerspanungswerkzeuge 1 über den Umfang des zu bearbeitenden Werkstücks verteilt gleichzeitig zum Einsatz kommen.

Das Zerspanungswerkzeug 1 hat einen Werkzeugträger 2, an dem bei der ersten Ausführungsform insgesamt zwei Sitze 3, 3' zur Aufnahme von auswechselbaren, indexierbaren Schneideinsätzen 4, 4' ausgebildet sind. Der Werkzeugträger 2 kann z.B. aus Stahl ausgebildet sein.

Bei dem konkret in den Fig. 1 bis Fig. 8 dargestellten Beispiel ist ein erster Schneideinsatz 4 der auswechselbaren, indexierbaren Schneideinsätze 4, 4' für eine Schruppbearbeitung des Werkstücks ausgelegt und der zweite Schneideinsatz 4' ist für eine anschließende Schlichtbearbeitung der durch den ersten Schneideinsatz 4 erzeugten Werkstückoberfläche ausgelegt. Im Einsatz erfolgt die Relativbewegung zwischen dem Zerspanungswerkzeug 1 und dem zu bearbeitenden Werkstück folglich derart, dass der zweite Schneideinsatz 4' dem ersten Schneideinsatz 4 bezüglich der Vorschubrichtung nachläuft. Der erste Schneideinsatz 4 weist dabei bei dem Ausführungsbeispiel eine bevorzugte im Wesentlichen hexagonale Grundform auf. Es sind jedoch auch andere insbesondere polygonale Grundformen möglich. Der zweite Schneideinsatz 4' weist eine im Wesentlichen dreieckige Grundform auf. Auch für den zweiten Schneideinsatz 4' sind jedoch auch andere Grundformen möglich.

Im Folgenden wird lediglich der Bereich des ersten Sitzes 3 und des daran angeordneten Schneideinsatzes 4 eingehender unter Bezug auf die Fig. 2 bis Fig. 8 beschrieben.

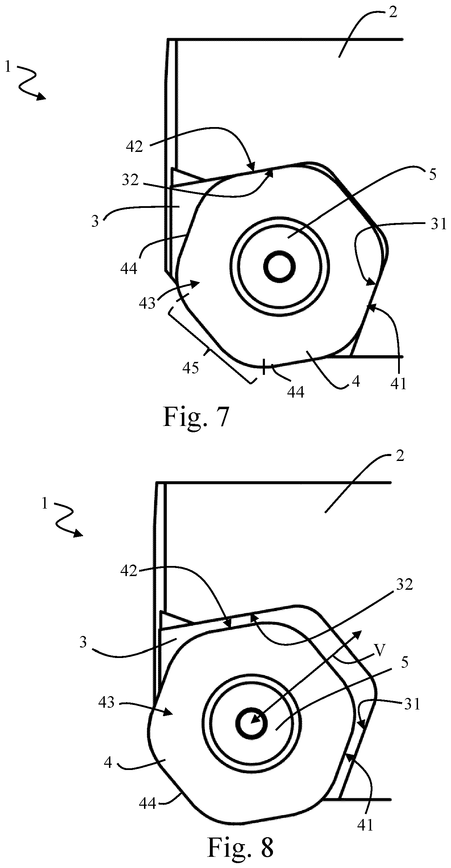

Wie insbesondere in den Fig. 1, Fig. 2, Fig. 7 und Fig. 8 zu sehen ist, hat der Schneideinsatz 4 eine Oberseite 43, eine Unterseite 40 und eine Mehrzahl von sich zwischen der Oberseite 43 und der Unterseite 40 erstreckenden Seitenflächen, von denen in den Figuren beispielhaft eine erste Seitenfläche 41 und eine weitere Seitenfläche 42 mit Bezugszeichen gekennzeichnet sind. Zumindest an dem Übergang von der Oberseite 43 zu den Seitenflächen ist dabei eine Schneidkante 44 ausgebildet, die eine Mehrzahl von nacheinander durch Indexierung bzw. Weiterschalten in eine aktive Zerspanungsposition bringbaren Schneidkantenabschnitten 45 aufweist, von denen einer beispielhaft in Fig. 7 gekennzeichnet ist. Bei dem konkret in den Figuren gezeigten Beispiel einer im Wesentlichen hexagonalen Grundform des Schneideinsatzes 4 sind an dem Übergang von der Oberseite 43 zu den Seitenflächen insgesamt sechs nacheinander verwendbare Schneidkantenabschnitte 45 ausgebildet. Es können jedoch, insbesondere z.B. bei einer anderen Grundform des Schneideinsatzes 4, auch mehr als sechs oder weniger als sechs nacheinander verwendbare Schneidkantenabschnitte 45 vorgesehen sein.

Der Schneideinsatz 4 kann z.B. als einseitiger Schneideinsatz ausgebildet sein, bei dem nur an dem Übergang von der Oberseite 43 zu den Seitenflächen eine Schneidkante 44 ausgebildet ist. Er kann z.B. aber auch als doppelseitiger Schneideinsatz ausgebildet sein, bei dem auch an dem Übergang von der Unterseite 40 zu den Seitenflächen eine weitere Schneidkante ausgebildet ist.

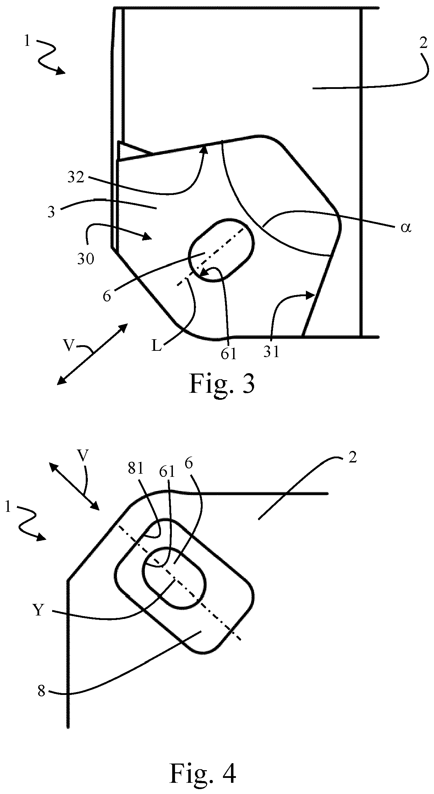

Der Sitz 3 an dem Werkzeugträger 2 wird im Folgenden unter Bezug auf die Fig. 3 eingehender beschrieben.

Wie in Fig. 3 zu sehen ist, weist der Sitz 3 eine Auflagefläche 30 auf, die zur Abstützung der Unterseite 40 des Schneideinsatzes 4 ausgebildet ist. Die Auflagefläche 30 erstreckt sich dabei zumindest überwiegend in einer Ebene und kann zur direkten, unmittelbaren Abstützung der Unterseite 40 derart, dass sie diese direkt berührt ausgebildet sein. Es ist jedoch z.B. auch möglich, dass zwischen der Unterseite 40 des Schneideinsatzes 4 und der Auflagefläche 30 noch eine Unterlagscheibe angeordnet wird, über die sich die Unterseite 40 mittelbar an der Auflagefläche 30 abstützt.

Der Sitz 3 weist ferner eine seitliche Anlagefläche 31 zur Abstützung einer Seitenfläche 41 des Schneideinsatzes 4 auf, wie ebenfalls in Fig. 3 zu sehen ist. Die seitliche Anlagefläche 31 kann sich dabei bevorzugt in einer Ebene senkrecht zu der Auflagefläche 30 des Sitzes 3 erstrecken. Der Sitz 3 weist auch noch eine weitere seitliche Anlagefläche 32 zur Abstützung einer weiteren Seitenfläche 42 des Schneideinsatzes 4 auf. Die weitere seitliche Anlagefläche 32 kann sich ebenfalls bevorzugt in einer Ebene senkrecht zu der Auflagefläche 30 des Sitzes 3 erstrecken. Alternativ dazu ist es z.B. auch möglich, dass sich die seitliche Anlagefläche 31 unter einem von 90° verschiedenen Winkel relativ zu der Auflagefläche 30 erstreckt, z.B. für den Fall, dass die Seitenflächen des Schneideinsatzes nicht senkrecht zu der Unterseite verlaufen. In diesem Fall kann sich bevorzugt auch die weitere seitliche Anlagefläche 32 unter demselben von 90° verschiedenen Winkel relativ zu der Auflagefläche 30 erstrecken.

Wie in Fig. 3 zu sehen ist, schließen die seitliche Anlagefläche 31 und die weitere seitliche Anlagefläche 32 in einer Blickrichtung senkrecht zu der Auflagefläche 30 einen sitzseitigen Innenwinkel α miteinander ein, der kleiner als 90° ist. Bei der konkret in den Figuren dargestellten Ausführungsform, bei der der Schneideinsatz 4 eine im Wesentlichen hexagonale Grundform aufweist, kann der Innenwinkel α z.B. ca. 60° betragen. Für den Fall, dass sich die seitliche Anlagefläche 31 und die weitere seitliche Anlagefläche 32 nicht senkrecht zu der Auflagefläche 30 erstrecken, ist der Innenwinkel α in einer zu der Auflagefläche 30 parallelen Ebene zwischen der seitlichen Anlagefläche 31 und der weiteren seitlichen Anlagefläche 32 zu messen.

Wie ebenfalls insbesondere in Fig. 3 zu sehen ist, ist in der Auflagefläche 30 des Sitzes 3 ein Durchgangsloch 6 ausgebildet, dass sich von der Auflagefläche 30 bis zu einer von der Auflagefläche 30 abgewandten Rückseite des Werkzeugträgers 2 erstreckt. Bei dem konkret dargestellten Ausführungsbeispiel ist das Durchgangsloch 6 als ein Langloch mit einer länglichen Querschnittsform ausgebildet. Die längliche Querschnittsform hat in einer Ebene parallel zu der Auflagefläche 30 eine Längsachse L.

Eine Befestigungsschraube 5 ist ferner dazu vorgesehen, um den Schneideinsatz 4 sicher an dem Sitz 3 zu befestigen. Die Befestigungsschraube 5 erstreckt sich entlang einer Schraubenachse Z und hat einen Kopfabschnitt 50 zur Abstützung an dem Schneideinsatz 4 und einen sich ausgehend von dem Kopfabschnitt 50 entlang der Schraubenachse Z erstreckenden Schaftabschnitt 51, wie insbesondere in Fig. 2 zu sehen ist. Der Schaftabschnitt 51 ist zumindest an seinem von dem Kopfabschnitt 50 abgewandten Ende mit einem Außengewinde 52 versehen.

Wie insbesondere in der rückseitigen Darstellung des Werkzeugträgers 2 in Fig. 4 zu sehen ist, ist rückseitig der Auflagefläche 30 in dem Werkzeugträger 2 eine Ausnehmung 8 ausgebildet. Die Ausnehmung 8 ist bei der Ausführungsform als eine längliche Vertiefung ausgebildet, deren Längsachse Y parallel zu der Längsachse L des Durchgangslochs 6 verläuft.

Bei dem konkret dargestellten Ausführungsbeispiel ist die Ausnehmung 8 z.B. als nur auf der von der Auflagefläche 30 abgewandten Seite offene und ansonsten umfangsseitig umschlossene Vertiefung ausgebildet. Die Ausnehmung 8 kann dabei z.B. insbesondere eine in etwa rechteckige Querschnittsform aufweisen. Gemäß einer Abwandlung kann die Ausnehmung jedoch z.B. auch auf der von der Auflagefläche 30 abgewandten Seite verschlossen sein, z.B. durch einen Deckel.

In der Ausnehmung 8 ist ein Klemmelement 7 angeordnet, wie insbesondere in den Fig. 2, Fig. 5 und Fig. 6 zu sehen ist. In dem Klemmelement 7 ist ein mit dem Außengewinde 52 der Befestigungsschraube 5 zusammenwirkendes Innengewinde 72 ausgebildet. Die Befestigungsschraube 5 ist mit dem Schaftabschnitt 51 durch ein Durchgangsloch 46 in dem Schneideinsatz 4 und durch das Durchgangsloch 6 in dem Werkzeugträger 2 hindurchgeführt und das Außengewinde 52 der Befestigungsschraube 5 ist in das Innengewinde 72 des Klemmelements 7 eingeschraubt. Der Kopfabschnitt 50 der Befestigungsschraube 5 stützt sich an dem Schneideinsatz 4 ab. Dazu kann das Durchgangsloch 46 des Schneideinsatzes 4 in dem Bereich nahe der Oberseite 43 des Schneideinsatzes 4 insbesondere mit einer an die Unterseite des Kopfabschnitts 50 angepassten Form versehen sein.

Das Klemmelement 7 ist dabei derart an die Form der Ausnehmung 8 angepasst, dass es entlang der Längsachse Y der Ausnehmung verschiebbar ist, in einer Richtung senkrecht zu der Längsachse Y und senkrecht zu der Schraubenachse Z jedoch derart in seiner Breite an die Breite der Ausnehmung 8 angepasst ist, dass es bezüglich einer Rotation um die Schraubenachse Z verdrehsicher in der Ausnehmung 8 gehalten ist. In Richtung der Längsachse Y der Ausnehmung 8 ist das Klemmelement 7 kürzer ausgebildet als die Ausnehmung 8, um ein Verschieben des Klemmelements 7 in dieser Richtung zu ermöglichen.

Wenn die Befestigungsschraube 5 nicht anzogen ist, so sind aufgrund der beschrieben Ausgestaltung die Befestigungsschraube 5 und das Klemmelement 7 gemeinsam in einer Verschieberichtung V verschiebbar, die parallel zu der Längsachse Y der Ausnehmung 8 verläuft. Bei der beschriebenen Realisierung des Durchgangslochs 6 als Langloch ist die Verschieberichtung V dabei auch parallel zu der Längsachse L der länglichen Querschnittsform des Durchgangslochs 6.

Um die Verschiebung in der Verschieberichtung V zu ermöglichen, muss das Durchgangsloch 6 zumindest in der Verschieberichtung V eine zumindest um den Verschiebeweg größere Erstreckung als der Durchmesser des Schaftabschnitts 51 der Befestigungsschraube 5 aufweisen.

Bei der ersten Ausführungsform ist die mögliche Verschiebung von Befestigungsschraube 5 und Klemmelement 7 in der Verschieberichtung V begrenzt. Bei dem konkret dargestellten Beispiel bildet eines Seitenwand der Ausnehmung 8 einen Anschlag 81, der die Verschiebung des Klemmelements 7 begrenzt. Alternativ oder zusätzlich dazu kann die Verschiebung auch über einen Anschlag 61 begrenzt werden, den die Seitenwand des Durchgangslochs 6 für den Schaftabschnitt 51 der Befestigungsschraube 5 bildet.

Die Verschieberichtung V hat bei der Ausführungsform eine Richtungskomponente senkrecht zu der seitlichen Anlagefläche 31 und auch eine Richtungskomponente senkrecht zu der weiteren seitlichen Anlagefläche 32. Die Verschieberichtung V verläuft also weder parallel zu der seitlichen Anlagefläche 31 noch parallel zu der weiteren seitlichen Anlagefläche 31. Bei der ersten Ausführungsform verläuft die Verschieberichtung V in einem Schnitt senkrecht zur Schraubenachse Z insbesondere entlang der Winkelhalbierenden zwischen seitlichen Anlagefläche 31 und der weiteren seitlichen Anlagefläche 32.

Im Folgenden wird ein Verfahren zum Indexieren des Schneideinsatzes 4 an dem Sitz 3 des zuvor beschriebenen Zerspanungswerkzeugs 1 eingehender beschrieben.

In einer Klemmposition, wie sie z.B. in den Fig. 1, Fig. 2, Fig. 5 und Fig. 7 gezeigt ist, ist der Schneideinsatz 4 durch die Befestigungsschraube 5 in Richtung der Auflagefläche 30 gespannt und liegt mit einer Seitenfläche 41 an der seitlichen Anlagefläche 31 sowie mit einer weiteren Seitenfläche 42 an der weiteren seitlichen Anlagefläche 32 an. Der Schneideinsatz 4 ist dabei teilweise kraftschlüssig über die Befestigungsschraube 5 und teilweise formschlüssig gegen Rotation um die Schraubenachse Z über die seitliche Anlagefläche 31 und die weitere seitliche Anlagefläche 32 an dem Sitz 3 gehalten.

Um den Schneideinsatz 4 zu indexieren, also einen nachfolgenden Schneidkantenabschnitt 45 der Schneidkante 44 in eine aktive Position zu bringen, wird die Befestigungsschraube 5 leicht gelockert. Dies kann z.B. durch ein Schraubwerkzeug erfolgen, dass in eine entsprechende (nicht detaillierter dargestellte) Schnittstelle an dem Kopfabschnitt 50 der Befestigungsschraube 5 eingreift. Die Gewindeverbindung zwischen dem Außengewinde 52 der Befestigungsschraube 5 und dem Innengewinde 72 des Klemmelements 7 wird dabei nicht vollkommen aufgehoben, sondern es wird lediglich das Anzugsmoment gelockert. Dies kann - je nach konkreter Ausgestaltung des Gewindes - z.B. nur eine Umdrehung der Befestigungsschraube 5 erfordern. Die verdrehsichere Anordnung des Klemmelements 7 in der Ausnehmung 8 verhindert dabei, dass sich das Klemmelement 7 ebenfalls um die Schraubenachse Z dreht.

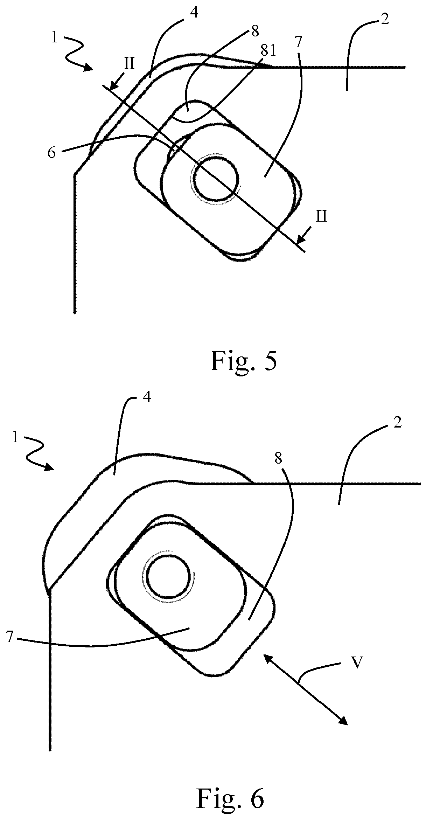

Durch das Lockern der Gewindeverbindung wird die Verspannung zwischen dem Schneideinsatz 4, dem Klemmelement 7 sowie dem zwischen diesen eingeschlossenen Bereich des Werkzeugträgers 2 gelöst. In diesem Zustand können die Befestigungsschraube 5, das Klemmelement 7 und der Schneideinsatz 4 gemeinsam in der Verschieberichtung V in die Indexierposition bewegt werden, die in den Fig. 6 und Fig. 8 schematisch dargestellt ist. Bei diesem Verschieben bewegt sich der Schaftabschnitt 51 der Befestigungsschraube 5 in der Verschieberichtung V in dem Durchgangsloch 6 und das Klemmelement 7 bewegt sich in der Verschieberichtung V in der Ausnehmung 8.

Aufgrund der aufeinander angepassten Form des Klemmelements 7 und der Ausnehmung 8 wird das Klemmelement 7 dabei schienenartig in der Ausnehmung 8 geführt. Durch die Ausbildung des Durchgangslochs 6 als Langloch wird auch der Schaftabschnitt 51 der Befestigungsschraube 5 in dem Durchgangsloch 6 geführt.

Die Bewegung in der Verschieberichtung V kann dabei soweit erfolgen, bis sie durch den Anschlag 61 und/oder den Anschlag 81 begrenzt wird. Bei dieser Bewegung wird die Seitenfläche 41 des Schneideinsatzes 4 von der seitlichen Anlagefläche 31 beabstandet und die weitere Seitenfläche 42 des Schneideinsatzes 4 wird von der weiteren seitlichen Anlagefläche 32 beabstandet, sodass die formschlüssige Sicherung des Schneideinsatzes 4 gegen Rotation um die Schraubenachse Z aufgehoben wird.

In der Indexierposition kann der Schneideinsatz 4 um die Schraubenachse Z gedreht werden, um diesen zu indexieren, also einen nachfolgenden Schneidkantenabschnitt 45 in die aktive Zerspanungsposition zu bringen. Bei dem konkret dargestellten Ausführungsbeispiel, bei dem der Schneideinsatz 4 eine im Wesentlichen hexagonale Grundform mit sechs nacheinander nutzbaren Schneidkantenabschnitten 45 aufweist, wird der Schneideinsatz 4 also z.B. um 60° (= 360°/6) oder ein ganzzahliges Mehrfaches von 60° um die Schraubenachse Z gedreht. Der für das Indexieren erforderliche Winkelbereich ist dabei allgemein durch die Zähligkeit der Rotationssymmetrie des Schneideinsatzes 4 um die Schraubenachse Z vorgegeben.

Nach dem Indexieren durch Drehung des Schneideinsatzes 4 um den vorgegebenen Winkelbereich werden die Befestigungsschraube 5, der Schneideinsatz 4 und das Klemmelement 7 wieder gemeinsam in die in Fig. 5 und Fig. 7 dargestellte Klemmposition bewegt, in der eine Seitenfläche 41 (eine andere als zuvor) an der seitlichen Anlagefläche 31 anliegt und eine weitere Seitenfläche 42 (eine andere als zuvor) an der weiteren seitlichen Anlagefläche 32 anliegt. In dieser Position ist der Schneideinsatz 4 wieder formschlüssig gegen Rotation um die Schraubenachse Z gesichert.

Durch anschließendes Anziehen der Gewindeverbindung zwischen Befestigungsschraube 5 und Klemmelement 7 wird der Schneideinsatz 4 wieder an dem Sitz 3 festgeklemmt, sodass er sich nicht mehr gemeinsam mit der Befestigungsschraube 5 und dem Klemmelement 7 verschieben lässt. Die drehsichere Anordnung des Klemmelements 7 in der Ausnehmung 8 verhindert dabei, dass sich beim Anziehen der Befestigungsschraube 5 das Klemmelement mitdreht.

### ZWEITE AUSFÜHRUNGSFORM

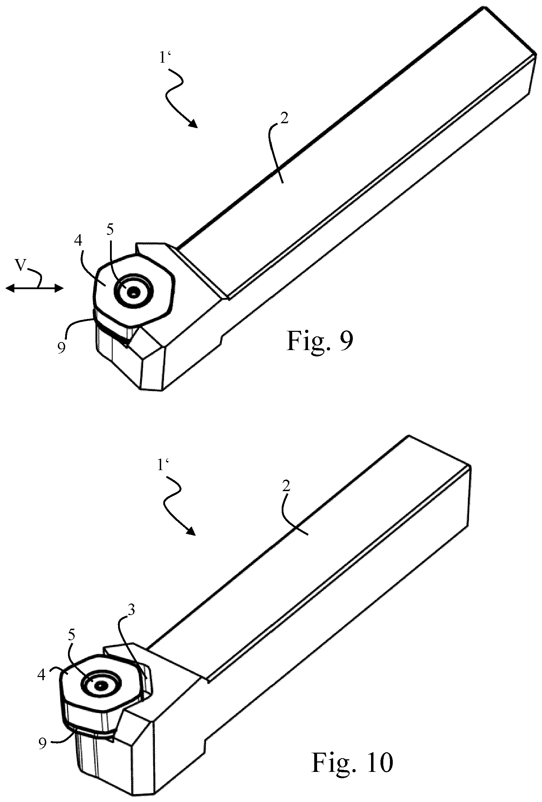

Eine zweite Ausführungsform des Zerspanungswerkzeugs wird nachfolgend mit Bezug auf die Fig. 9 und Fig. 10 kurz beschrieben. Dabei werden zur Vermeidung von Wiederholungen nur die Unterschiede zu der zuvor beschriebenen ersten Ausführungsform erläutert und es werden dieselben Bezugszeichen wie bei der ersten Ausführungsform verwendet.

Das Zerspanungswerkzeug 1' gemäß der zweiten Ausführungsform ist ein Drehhalter für eine Drehbearbeitung, bei dem der Werkzeugträger 2 nur einen Sitz 3 zur Aufnahme eines auswechselbaren, indexierbaren Schneideinsatzes 4 aufweist. Der beispielhaft dargestellte Werkzeugträger 2 ist bei der zweiten Ausführungsform dabei insbesondere als ein sogenannter Monoblock-Drehhalter ausgebildet.

Als weiterer Unterschied zu der zuvor beschriebenen ersten Ausführungsform stützt sich der Schneideinsatz 4 bei der zweiten Ausführungsform ferner mittelbar über eine dazwischen angeordnete Unterlagscheibe 9 an der Auflagefläche des Sitzes 3 ab.

Die weiteren Merkmale des Sitzes 3 und auch des zuvor beschriebenen Mechanismus zur Indexierung des Schneideinsatzes 4 sind identisch zu denen der zuvor beschriebenen ersten Ausführungsform und werden daher nicht wiederholt.

In Fig. 9 ist das Zerspanungswerkzeug 1' gemäß der zweiten Ausführungsform in einem Zustand dargestellt, in dem der Schneideinsatz 4 in einer Klemmposition gehalten ist. In Fig. 10 ist das Zerspanungswerkzeug 1' in einem Zustand dargestellt, in dem sich der Schneideinsatz 4 in der Indexierposition befindet.

### ABWANDLUNGEN

Obwohl bei den zuvor beschriebenen Ausführungsformen jeweils eine Ausgestaltung des Durchgangslochs 6 als Langloch beschrieben wurde, die besonders vorteilhaft ist, kann das Durchgangsloch z.B. auch eine andere Querschnittsform aufweisen und die Verschieberichtung z.B. nur über die Führung des Klemmelements 7 in der Ausnehmung 8 vorgegeben werden. Es ist jedoch zu beachten, dass das Durchgangsloch 6 ein ausreichendes Übermaß gegenüber dem Schaftabschnitt 51 der Befestigungsschraube 5 aufweisen muss, damit eine ausreichende Verschiebung ermöglicht ist.

Obwohl als Ausführungsbeispiele des Zerspanungswerkzeugs beispielhaft eine Schälkassette zum Schäldrehen und ein Monoblockhalter für die Drehbearbeitung beschrieben wurden, kann das Zerspanungswerkzeug auch eine andere Ausgestaltung haben. Z.B. ist die Anwendung nicht zwingend auf eine Drehbearbeitung beschränkt, sondern es sind auch Zerspanungswerkzeuge für andere Zerspanungsanwendungen denkbar. Insbesondere bei Zerspanungswerkzeugen für eine Drehbearbeitung ist der beschriebene Mechanismus zur Indexierung von Schneideinsätzen jedoch besonders geeignet.

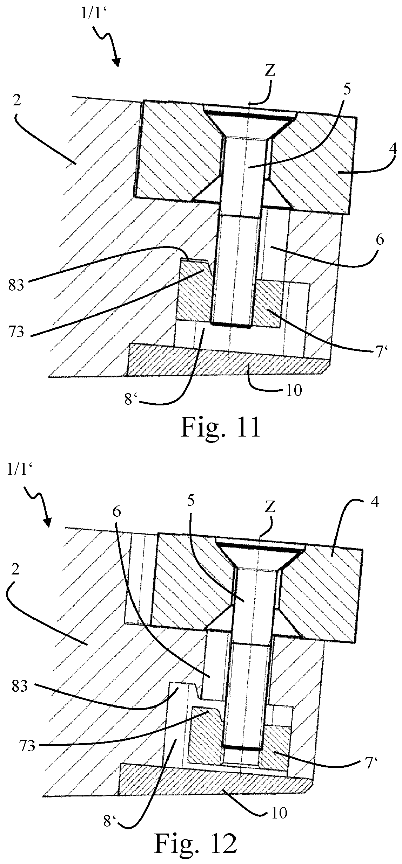

Eine Abwandlung der Ausgestaltung des Zerspanungswerkzeugs im Bereich des Sitzes wird im Folgenden kurz unter Bezugnahme auf die Fig. 11 und Fig. 12 beschrieben. Die Abwandlung kann dabei in Kombination mit den zuvor beschriebenen Ausführungsbeispielen und Abwandlungen zum Einsatz kommen. Die in den Fig. 11 und Fig. 12 dargestellte Abwandlung unterscheidet sich darin von den zuvor beschriebenen Ausführungsformen, dass i) der Schneideinsatz 4 als doppelseitiger Schneideinsatz ausgebildet ist, ii) die Ausnehmung 8' und das Klemmelement 7' auch zur Sicherung des Schneideinsatzes 4 in der Klemmposition mit einer formschlüssigen Komponente ausgebildet sind und iii) die Ausnehmung 8' auch mit einem Deckel 10 rückseitig verschlossen ist. Es ist jedoch zu beachten, dass diese Unterschiede i), ii) und iii) auch jeweils einzeln oder in beliebiger Kombination zum Einsatz kommen können.

Der Deckel 10 verschließt die Ausnehmung 8' rückseitig, sodass ein Eindringen von Schmutz verhindert wird. Durch den Deckel 10 wird ferner verhindert, dass das Klemmelement 7' bei einer vollständigen Entnahme der Befestigungsschraube 5 herunterfällt bzw. verlorengeht.

Wie in den Fig. 11 und Fig. 12 zu sehen ist, weist die Ausnehmung 8' eine zusätzliche rampenförmige Vertiefung 83 auf, die dazu ausgebildet ist, mit einem nasenartigen Vorsprung 73 des Klemmelements 7' zusammenzuwirken. die Vertiefung 83 und der Vorsprung 73 wirken dabei nach dem Prinzip einer schiefen Ebene derart zusammen, dass bei einem Anziehen der Befestigungsschraube 5 der Schneideinsatz 4, die Befestigungsschraube 5 und das Klemmelement 7' gemeinsam in Richtung der Klemmposition gespannt werden, wie in Fig. 11 zu sehen ist. Dabei bewirkt das Zusammenspiel zwischen dem Vorsprung 73 und der Vertiefung 83 eine zusätzliche formschlüssige Sicherung in der Klemmposition, sodass die Fixierung in der Klemmposition nicht nur durch Flächenpressung und Reibung erfolgt, wie es bei der zuvor beschriebenen Realisierung der Fall ist.

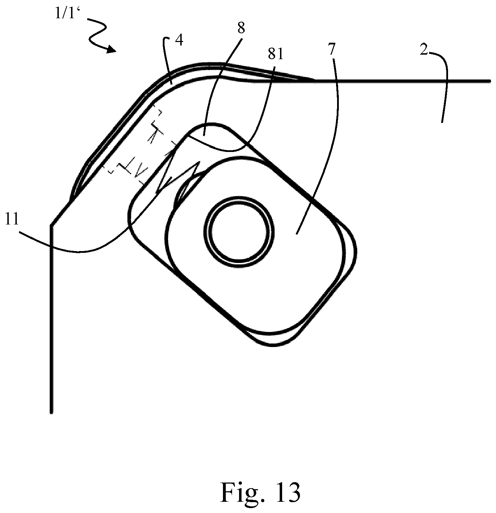

Bei der in Fig. 13 schematisch dargestellten weiteren Abwandlung ist ein Federelement 11 zusätzlich vorgesehen, welches das Klemmelement 7 und damit mittelbar auch die Befestigungsschraube 5 und den Schneideinsatz 4 in Richtung der Klemmposition vorspannt. In dieser Weise wird eine besonders komfortable Indexierung ermöglicht. Obwohl in Fig. 13 beispielhaft schematisch eine Schraubenfeder als Federelement 11 dargestellt ist, können auch anders ausgebildete Federelemente zum Einsatz kommen, die eine Vorspannung in Richtung der Klemmposition bewirken.

Es ist zu beachten, dass auch diese weitere Abwandlung bei beiden zuvor beschriebenen Ausführungsbeispielen und auch in Kombination mit den oben angegebenen Abwandlungen zum Einsatz kommen kann.

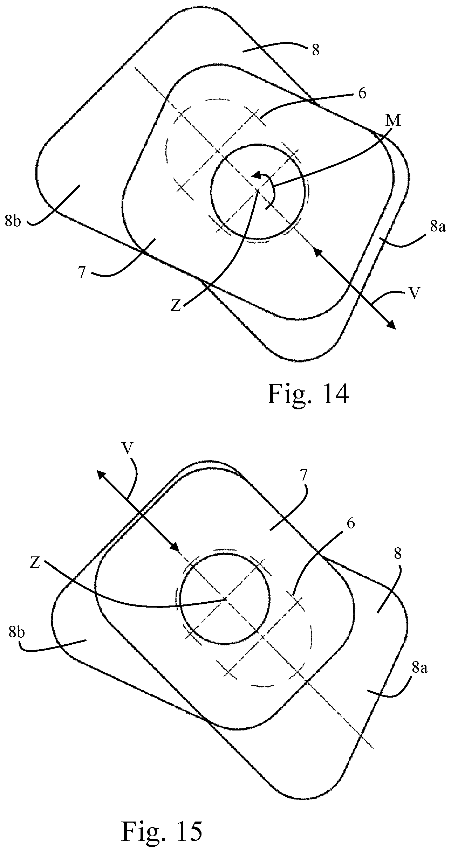

Noch eine weitere Abwandlung, bei der eine zusätzliche formschlüssige Sicherung in der Klemmposition bereitgestellt wird, wird nachfolgend unter Bezugnahme auf die schematischen Darstellungen der Fig. 14 und Fig. 15 kurz erläutert. Die weitere Abwandlung unterscheidet sich von den zuvor beschriebenen Ausgestaltungen darin, dass die Ausnehmung 8 im Querschnitt keine im Wesentlichen rechteckige Grundform aufweist, sondern einen Klemmabschnitt 8a und einen zu diesem bezüglich der Schraubenachse Z etwas verdrehten Indexierabschnitt 8b aufweist.

Die Funktionalität dieser weiteren Abwandlung wird nun noch kurz eingehender erläutert. Wenn das Klemmelement 7 in der in Fig. 15 dargestellten Indexierposition ist, kann der (in den Fig. 14 und Fig. 15 nicht dargestellte) Schneideinsatz indexiert werden, wie es oben bezüglich der Ausführungsformen beschrieben wurde. Ferner sind das Klemmelement 7, die Befestigungsschraube 5 und der Schneideinsatz 4 in dieser Stellung auch in der Verschieberichtung V verschiebbar, wie es zuvor für die Ausführungsform beschrieben wurde. Wenn das Klemmelement 7 gemeinsam mit der Befestigungsschraube 5 und dem Schneideinsatz 4 entlang der Verschieberichtung V in die in Fig. 15 gezeigte Klemmposition bewegt wird, wird das Klemmelement 7 zunächst durch die Seitenwände der Ausnehmung 8 in der Verschieberichtung V geführt, bis der Schneideinsatz 4 an der seitlichen Anlagefläche 31 und der weiteren seitlichen Anlagefläche 32 anliegt, wie es oben beschrieben wurde. Bei einem Anziehen der Befestigungsschraube 5 übt diese ein Drehmoment M auf das Klemmelement 7 aus, wie in Fig. 14 schematisch durch einen Pfeil eingezeichnet ist. Durch die bezüglich der Schraubenachse Z etwas verdreht zu dem Indexierabschnitt 8b angeordnete Ausgestaltung des Klemmabschnitts 8a verdreht sich das Klemmelement 7 aufgrund des durch die Befestigungsschraube 5 ausgeübten Drehmoments leicht um die Schraubenachse Z in die in Fig. 14 dargestellte Klemmposition. Aufgrund der Verdrehung ist das Klemmelement 7 nun durch die Seitenwände des Klemmabschnitts 8a formschlüssig gegen ein Verschieben in der Verschieberichtung V gesichert. Folglich ist der Schneideinsatz 4 neben der kraftschlüssigen Befestigung über die Befestigungsschraube 5 auch formschlüssig in der Klemmposition gesichert.

Auch diese weitere Abwandlung kann mit den zuvor beschriebenen Ausführungsformen und Abwandlungen beliebig kombiniert werden.

## Patentansprüche

1. Zerspanungswerkzeug (1; 1') mit
einem Werkzeugträger (2), an dem zumindest ein Sitz (3) zur Aufnahme eines auswechselbaren, indexierbaren Schneideinsatzes (4) ausgebildet ist, und einer Befestigungsschraube (5) zum Befestigen des Schneideinsatzes (4) an dem Sitz (3), die einen Kopfabschnitt (50) zur Abstützung an dem Schneideinsatz (4) und einen zumindest bereichsweise mit einem Außengewinde (52) versehenen Schaftabschnitt (51) aufweist,
wobei der Sitz (3) eine Auflagefläche (30) zur Abstützung einer Unterseite (40) des Schneideinsatzes (4) und zumindest eine seitliche Anlagefläche (31) zur Abstützung einer Seitenfläche (41) des Schneideinsatzes (4) aufweist,
wobei in der Auflagefläche (30) ein Durchgangsloch (6) ausgebildet ist, durch das der Schaftabschnitt (51) der Befestigungsschraube (5) hindurchgreift,
wobei an dem Werkzeugträger (2) rückseitig der Auflagefläche (30) des Sitzes (3) ein Klemmelement (7) angeordnet ist, in dem ein mit dem Außengewinde (52) der Befestigungsschraube (5) zusammenwirkendes Innengewinde (72) ausgebildet ist,
wobei die Befestigungsschraube (5) und das Klemmelement (7) gemeinsam in einer Verschieberichtung (V) verschiebbar sind.

2. Zerspanungswerkzeug nach Anspruch 1, wobei der Werkzeugträger (2) ferner einen Anschlag (61, 81) aufweist, der die gemeinsame Verschiebung der Befestigungsschraube (5) und des Klemmelements (7) begrenzt.

3. Zerspanungswerkzeug nach Anspruch 1 oder 2, wobei die Verschieberichtung (V) eine Richtungskomponente senkrecht zu der seitlichen Anlagefläche (31) aufweist.

4. Zerspanungswerkzeug nach einem der vorangehenden Ansprüche, wobei der Sitz (3) zumindest eine weitere seitliche Anlagefläche (32) zur Abstützung einer weiteren Seitenfläche (42) des Schneideinsatzes (4) aufweist.

5. Zerspanungswerkzeug nach Anspruch 4, wobei die Verschieberichtung (V) eine Richtungskomponente senkrecht zu der weiteren seitlichen Anlagefläche (32) aufweist.

6. Zerspanungswerkzeug nach Anspruch 4 oder 5, wobei die seitliche Anlagefläche (31) und die weitere seitliche Anlagefläche (32) in Blickrichtung senkrecht zu der Auflagefläche (30) einen sitzseitigen Innenwinkel (α) < 90° einschließen.

7. Zerspanungswerkzeug nach einem der vorangehenden Ansprüche, wobei das Durchgangsloch (6) als Langloch mit einer länglichen Querschnittsform ausgebildet ist und die Längsachse (L) der länglichen Querschnittsform in der Verschieberichtung (V) verläuft.

8. Zerspanungswerkzeug nach einem der vorangehenden Ansprüche, wobei das Klemmelement (7) in einer rückseitigen Ausnehmung (8) des Werkzeugträgers (2) aufgenommen ist.

9. Zerspanungswerkzeug nach Anspruch 8, wobei das Klemmelement (7) verdrehsicher und in der Verschieberichtung (V) verschiebbar in der Ausnehmung (8) gehalten ist.

10. Zerspanungswerkzeug nach einem der vorangehenden Ansprüche, wobei das Zerspanungswerkzeug (1) eine Schälkassette zum Schäldrehen ist.

11. Zerspanungswerkzeug nach Anspruch 10, wobei das Zerspanungswerkzeug zumindest zwei Sitze (3, 3') zur Aufnahme von auswechselbaren Schneideinsätzen (4, 4') aufweist.

12. Zerspanungswerkzeug nach einem der vorangehenden Ansprüche, mit einem an dem Sitz (3) angeordneten auswechselbaren, indexierbaren Schneideinsatz (4).

13. Verfahren zum Indexieren eines Schneideinsatzes (4) an einem Sitz (3) eines Zerspanungswerkzeugs (1; 1'), wobei das Zerspanungswerkzeug (1; 1') eine Befestigungsschraube (5) zum Befestigen des Schneideinsatzes (4) an dem Sitz (3) aufweist, die einen Kopfabschnitt (50) zur Abstützung an dem Schneideinsatz (4) und einen zumindest bereichsweise mit einem Außengewinde (52) versehenen Schaftabschnitt (51) aufweist,
wobei der Sitz (3) eine Auflagefläche (30) zur Abstützung einer Unterseite des Schneideinsatzes (4) und zumindest eine seitliche Anlagefläche (31) zur Abstützung einer Seitenfläche (41) des Schneideinsatzes (40) aufweist, der Schaftabschnitt (51) der Befestigungsschraube (5) ein Durchgangsloch (6) in der Auflagefläche (30) durchgreift und das Außengewinde (52) mit einem Innengewinde (72) in einem rückseitig der Auflagefläche (30) verschiebbar angeordneten Klemmelement (7) zusammenwirkt,
wobei das Verfahren die Schritte aufweist:
- Lockern der Gewindeverbindung zwischen dem Außengewinde (52) der Befestigungsschraube (5) und dem Innengewinde (72) des Klemmelements (7), ohne die Befestigungsschraube (5) vollständig von dem Klemmelement (7) zu lösen;
- gemeinsames Verschieben der Befestigungsschraube (5), des Klemmelements (7) und eines durch die Befestigungsschraube (5) gehaltenen auswechselbaren indexierbaren Schneideinsatzes (4) entlang einer Verschieberichtung (V), sodass der Schneideinsatz (4) nicht mit einer Seitenfläche an der seitlichen Anlagefläche (31) anliegt;
- Indexieren des Schneideinsatzes (4) durch Drehung des Schneideinsatzes um die Schraubenachse (Z) der Befestigungsschraube (5) um einen vorgegebenen Winkelbereich;
- gemeinsames Verschieben der Befestigungsschraube (5), des Klemmelements (7) und des Schneideinsatzes (4) zu der seitlichen Anlagefläche (31) hin, sodass der Schneideinsatz (4) mit einer Seitenfläche (41) an der seitlichen Anlagefläche (31) anliegt; und
- Anziehen der Gewindeverbindung zwischen dem Außengewinde (52) der Befestigungsschraube (5) und dem Innengewinde (72) des Klemmelements (7), sodass der Schneideinsatz (4) an dem Sitz (3) festgeklemmt wird.

14. Verfahren nach Anspruch 13, wobei das gemeinsame Verschieben in einer Verschieberichtung (V) erfolgt, die eine Richtungskomponente senkrecht zu der seitlichen Anlagefläche (31) aufweist.

15. Verfahren nach Anspruch 13 oder 14, wobei das Klemmelement (7) verdrehsicher an dem Zerspanungswerkzeug (1) gehalten ist.

16. Verfahren nach einem der Ansprüche 13 bis 15, wobei die Befestigungsschraube (5) und das Klemmelement (7) bei dem gemeinsamen Verschieben durch das Durchgangsloch (6) und/oder eine Ausnehmung (8) für das Klemmelement (7) in der Verschieberichtung (V) in dem Zerspanungswerkzeug geführt werden.
